# FASCICULE DE BREVET EUROPEEN

(11) **EP 0 332 477 B1**
(45) Date de publication et mention de la délivrance du brevet: **18.08.1993**
(21) Numéro de dépôt: 89400161.9
(22) Date de dépôt: 19.01.1989
(51) Int. Cl.: A23N 3/00

(54) **Dispositif de convoyage d'objets tels que notamment fruits et légumes en vue notamment de leur contrôle de qualité**
Förderanlage für Gegenstände, wie insbesondere Früchte und Gemüse, insbesondere zur Qualitätskontrolle
Conveyor device for articles, e.g. in particular fruits and vegetables, especially for quality control

(30) Priorité: 08.03.1988 FR 8802946
(43) Date de publication de la demande: 13.09.1989
(73) Titulaire: SOCIETE MONTALBANAISE DE CONSTRUCTION MECANIQUE, dite S.M.C.M., F-82001 Montauban (FR)
(72) Inventeur: Blanc, Philippe, F-82000 Montauban (FR)
(74) Mandataire: Armengaud Ainé, Alain

(56) Documents cités:
- FR-A- 2 185 564
- US-A- 4 033 450

## Description

La présente invention concerne un dispositif de convoyage d'objets tels que notamment des fruits et légumes, qui est conçu de manière à permettre leur alignement et leur mise en rotation suivant leur axe propre durant leur acheminement. Cette invention est destinée plus particulièrement aux installations permettant des analyses dimensionnelles colorimétriques et qualitatives de toute la surface d'un fruit à l'exclusion de ses deux pôles. L'invention permet donc de réaliser un alignement et une mise en rotation des fruits lors de leur passage devant un système de capteur optique placé au-dessus du dispositif de convoyage, ce système assurant une analyse de la totalité de la surface du fruit à l'exclusion de ses deux pôles ainsi qu'on l'a mentionné ci-dessus.

Un autre but de la présente invention est de permettre une détection de la coloration et/ou des défauts de la surface d'un objet tel que fruit ou légume, sans être perturbé par les irrégularités naturelles de surface des deux pôles dudit objet.

Le brevet US N° 4 033 450 décrit un dispositif de convoyage d'objets, notamment d'objets de révolution et plus particulièrement de fruits et de légumes, qui est conçu de manière à les aligner et à les entraîner en rotation selon leur axe propre durant leur déplacement en translation, ledit dispositif étant muni de moyens de transport rotatifs, recevant les objets à convoyer.

L'invention concerne un dispositif de convoyage d'objets, comme défini ci-dessus, et qui se caractérisé en ce que lesdits moyens de transport sont constitués par :
- deux cylindres longitudinaux à axes parallèles, entraînés en rotation dans le même sens autour de leur axe longitudinal respectif,
- un système de progression, disposé entre les deux cylindres, qui comprend une pluralité d'éléments de révolution tels que notamment des boules, se déplaçant selon un mouvement de translation entre lesdits cylindres, l'écartement desdits éléments de révolution tels que boules étant déterminé de manière qu'un objet aligné puisse prendre place entre deux boules successives,

les objets à aligner étant entraîné en rotation dans le sens inverse du mouvement de rotation des cylindres et ils sont poussés parallèlement aux axes des cylindres, le long de ces derniers, par lesdits éléments de révolution tels que boules, qui viennent en place sur l'un des pôles de l'objet, ce dernier se stabilisant alors selon un mouvement de rotation autour de son axe propre en continuant à avancer dans cette position le long desdits cylindres.

Selon l'invention, les cylindres peuvent être garnis de poils de brosse ou être munis d'une garniture de friction afin de favoriser la mise en rotation des objets transportés.

Selon un exemple de réalisation de l'invention, les moyens de progression comportent une chaîne sans fin dont le brin supérieur se déplace parallèlement aux cylindres entre ces derniers, les éléments de révolution tels que boules étant montés sur des supports solidaires de ladite chaîne.

Selon l'invention, lesdits éléments de révolution tels que boules peuvent être montés sur une tige qui constitue leur axe de révolution, chaque tige étant montée sur un support solidaire de la chaîne, de manière à être libre en rotation, des moyens étant prévus pour entraîner en rotation ladite tige lors du déplacement de la chaîne. A cet effet, l'extrémité de la tige sur laquelle est monté l'élément de révolution tel que boule, comporte un embout qui vient appuyer sur un élément fixe afin que le frottement entre cet élément fixe et l'embout de la tige portant la boule provoque la rotation de cette dernière.

L'invention vise également l'application du dispositif de convoyage décrit ci-dessus à une installation de tri et/ou de contrôle optique, dimensionnel et de qualité d'objet de révolution tel que notamment fruits et légumes, caractérisé en ce que des moyens d'analyse dimensionnelle et d'analyse colorimétrique et qualitative de toute la surface de l'objet à l'exception de ses pôles, sont disposés au-dessus du dispositif de convoyage, dans la partie aval où les objets sont stabilisés selon leur mouvement de rotation autour de leur axe propre.

D'autres caractéristiques et avantages de la présente invention ressortiront de la description faite ci-après en référence au dessin annexé qui en illustre un exemple de réalisation dépourvu de tout caractère limitatif. Sur le dessin :
La figure 1 est une vue en perspective cavalière représentant partiellement et de façon schématique le dispositif de convoyage selon la présente invention ;
La figure 2 est une vue en perspective similaire à la figure 1, représentant le dispositif de convoyage et son système de progression associé et
La figure 3 est une vue à plus grande échelle représentant, en bout, le dispositif de convoyage selon l'invention.

En se référant au dessin, on voit que le dispositif objet de la présente invention a pour but de transporter des objets tels que des fruits et des légumes en vue de les aligner et de les mettre en rotation selon leur axe propre. Sur le dessin, les objets à aligner ont été représentés sous la forme de pommes 14 que l'on désire présenter à un système de capteur optique, situé au-dessus du dispositif de convoyage objet de l'invention, de manière que ce capteur assure l'analyse de l'intégralité de la surface du fruit, à l'exclusion de ses deux pôles. C'est la raison pour laquelle le dispositif de convoyage décrit ci-après aligne les fruits selon un axe passant par leur pôle, c'est à dire par les cavités naturelles des pôles du fruit et permet en outre de les entraîner en rotation selon ledit axe.

Le dispositif comprend essentiellement un système transporteur et un système de progression.

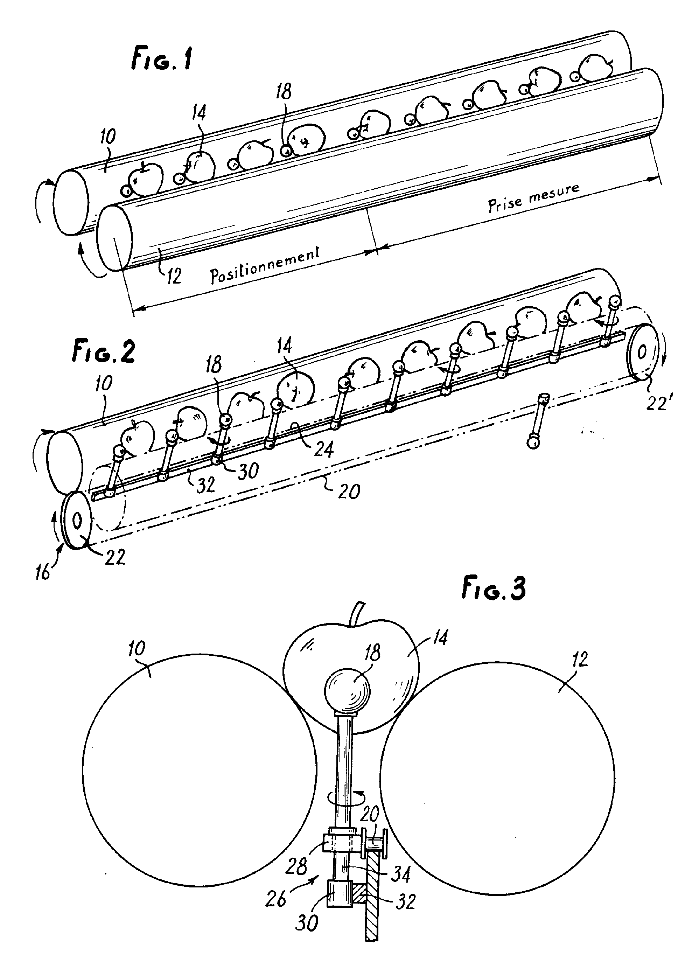

Le système transporteur est constitué de deux cylindres longitudinaux 10, 12, dont les axes sont parallèles et qui sont entraînés en rotation dans le même sens autour de leur axe longitudinal respectif, ainsi qu'on peut le voir sur les figures 1 et 2. Les fruits tels que pommes 14 sont déposés sur les cylindres.

Le système de progression désigné dans son ensemble par la référence 16 comprend essentiellement des éléments de révolution tels que des boules 18, constituant un progresseur à pas, chacune des boules étant disposée entre deux fruits consécutifs et pouvant être entraînée en rotation sur elle-même tout en avançant entre les deux cylindres 10 et 12.

Dans l'exemple de réalisation non limitatif illustré par la figure 2, le système de progression comprend un transporteur à chaîne 20, dont la chaîne sans fin circule entre les roues 22 et 22' dont l'une est motrice, les éléments de révolution tels que boules 18 étant montés sur la chaîne de manière à être perpendiculaire au brin supérieur 24 de ladite chaîne lorsque les boules 18 circulent entre les deux cylindres 10, 12, comme représenté sur la figure 1.

On a représenté sur la figure 3 la façon selon laquelle les éléments de révolution 18 peuvent être montés par l'intermédiaire de supports respectifs désignés dans leur ensemble par la référence 26, sur les maillons de chaînes 20. On voit que chaque boule 18 est montée sur une tige 34 qui constitue son axe de rotation et chaque tige est montée sur un support 28 qui est solidaire d'un maillon de la chaîne 20 de manière à rester libre en rotation. Des moyens sont prévus pour permettre l'entraînement en rotation de la tige 34 lors du déplacement de la chaîne. Dans l'exemple de réalisation illustré par la figure 3, ces moyens consistent à prévoir à l'extrémité de chaque tige 34 un embout tel que 30 qui vient appuyer sur un élément fixe 32 de manière que le frottement entre l'embout 30 et l'élément fixe 32 entraîne en rotation la tige 34 et, par conséquent, la boule 18. On peut, bien entendu, sans sortir du cadre de l'invention, envisager tout autre moyen d'entraînement.

Selon l'invention, les cylindres 10 et 12 peuvent être pourvus d'une garniture de friction favorisant la mise en rotation des fruits dans un sens opposé à la rotation des cylindres. Ils peuvent être également pourvus de poils de brosse répondant aux mêmes préoccupations.

Le fonctionnement du dispositif mentionné ci-dessus dans son application au convoyage de fruits est le suivant :

Les fruits tels que les pommes 14 sont disposés successivement entre les boules 18 comme représenté sur les dessins. Ils se mettent naturellement en rotation dans un sens opposé au sens de rotation des cylindres 10, 12, en raison du frottement entre leur surface et celle des cylindres.

Chaque boule 18 animée de son mouvement de translation en raison du déplacement en translation du brin supérieur 24 de la chaîne 20, pousse chaque fruit 14 de la gauche vers la droite, en regardant le dessin, et son mouvement de rotation fait tourner chaque fruit selon un axe qui est perpendiculaire à l'axe de rotation créé par le frottement, jusqu'à ce que la boule vienne se loger dans l'une des deux cavités naturelles des pôles du fruit. A partir de cet instant, le fruit se stabilise selon un mouvement de rotation par rapport à son axe propre tout en continuant à se déplacer le long des cylindres 10 et 12, étant repoussé par le moyen de progression constitué par les boules 18 entraînées par la chaîne 20.

Lorsque le dispositif décrit ci-dessus est appliqué à une installation de contrôle optique, l'analyse optique est alors effectuée dans la zone indiquée sur la figure 1 (prise mesure), c'est à dire en aval dans la partie du convoyage des objets où le mouvement de ceux-ci est stabilisé selon une rotation suivant leur axe naturel. Ainsi, le dispositif objet de l'invention permet d'assurer une analyse dimensionnelle de tout le fruit à l'exception bien entendu de la partie des deux pôles de ces derniers, il permet également de réaliser une analyse colorimétrique et qualitative de toute la surface d'un fruit sans être perturbé par les irrégularités naturelles de surface situées près des deux pôles.

Il demeure bien entendu que la présente invention n'est pas limitée aux divers exemples de réalisation et d'application décrits et/ou représentés ici mais qu'elle en englobe toutes les variantes.

## Revendications

1. Dispositif de convoyage d'objets, notamment d'objets de révolution et plus particulièrement de fruits et de légumes qui est conçu de manière à les aligner et à les entraîner en rotation selon leur axe propre durant leur déplacement en translation, ledit dispositif étant muni de moyens de transport rotatifs, recevant les objets à convoyer caractérisé en ce que lesdits moyens de transport sont constitués par :
- deux cylindres longitudinaux (10, 12) à axes parallèles, entraînés en rotation dans le même sens autour de leur axe longitudinal respectif,
- un système de progression (16), disposé entre les deux cylindres, qui comprend une pluralité d'éléments de révolution tels que notamment des boules (18), se déplaçant selon un mouvement de translation entre lesdits cylindres, l'écartement desdits éléments de révolution tels que boules étant déterminé de manière qu'un objet aligné puisse prendre place entre deux boules successives,
de manière que les objets à aligner soient entraînés en rotation dans le sens inverse du mouvement de rotation des cylindres et soient poussés parallèlement aux axes des cylindres, le long de ces derniers, par lesdits éléments de révolution tels que boules, qui viennent en place sur l'un des pôles de l'objet, ce dernier se stabilisant alors selon un mouvement de rotation autour de son axe propre en continuant à avancer dans cette position le long desdits cylindres.

2. Dispositif du convoyage selon la revendication 1, caractérisé en ce que les cylindres (10, 12) sont pourvus d'une garniture de fiction.

3. Dispositif de convoyage selon la revendication 1, caractérisé en ce que les cylindres (10, 12) sont garnis de poils de brosse.

4. Dispositif de convoyage selon l'une quelconque des revendications précédentes, caractérisé en ce que les éléments de révolution tels que boules (18) du système de progression (16) tournent sur eux-mêmes.

5. Dispositif de convoyage selon l'une des revendications précédentes, caractérisé en ce que les moyens de progression (16) comportent une chaîne sans fin (20) dont le bras supérieur (24) se déplace parallèlement aux cylindres (10, 12) entre ces derniers, les éléments de révolution tels que boules (18) étant montés sur des supports solidaires de ladite chaîne.

6. Dispositif de convoyage selon la revendication 5, caractérisé en ce que lesdits éléments de révolution tels que boules (18) peuvent être montés sur une tige (34) qui constitue leur axe de rotation, chaque tige étant montée sur un support (28) solidaire d'une maillon de la chaîne (20), de manière à être libre en rotation, des moyens étant prévus pour entraîner en rotation ladite tige lors du déplacement de la chaîne.

7. Dispositif de convoyage selon la revendication 6, caractérisé en ce que l'extrémité de la tige (34) sur laquelle est monté l'élément de révolution tel que boule (18), comporte un embout (30) qui vient appuyer sur un élément fixe (32) afin que le frottement entre cet élément fixe et l'embout de la tige portant la boule provoque la rotation de cette dernière.

8. Dispositif selon l'une quelconque des revendications précédentes, appliqué à une installation de tri et/ou de contrôle optique, dimensionnel et de qualité d'objets de révolution tel que notamment fruits et légumes, caractérisés en ce que des moyens d'analyse dimensionnelle et d'analyse colorimétrique et qualitative de toute la surface de l'objet à l'exception de ces pôles, sont disposés au dessus du dispositif de convoyage, dans la partie aval où les objets sont stabilisés selon leur mouvement de rotation autour de leur axe propre.

## Patentansprüche

1. Fördervorrichtung für Gegenstände, vor allem für sich drehende Gegenstände und insbesondere für Früchte und Gemüse, in der die Gegenstände in einer Reihe ausgerichtet und während ihrer transiatorischen Bewegung um ihre Achse in Drehung versetzt werden, wobei die Vorrichtung drehbare Transportelemente aufweist, die die zu fördernden Gegenstände aufnehmen,
dadurch **gekennzeichnet**,
daß die Transportelemente aus zwei sich längs erstreckenden Walzen (10,12) mit parallelen Achsen, die in derselben Drehrichtung um ihre jeweilige Längsachse in Drehung versetzt werden, und einer Vortriebsvorrichtung (16) zwischen den beiden Walzen bestehen, wobei die Vortriebsvorrichtung eine Vielzahl von sich drehenden Elementen, insbesondere Kugeln (18), aufweist, die sich in einer Translationsbewegung zwischen den Walzen vorwärts bewegen, wobei der Abstand zwischen den sich drehenden Elementen, beispielsweise Kugeln, so gewählt ist, daß ein Gegenstand zwischen zwei aufeinanderfolgenden Kugeln platz findet, so daß die aufzureihenden Gegenstände in eine gegenläufig zur Drehrichtung der Walzen gerichtete Drehung versetzt und durch die Drehelemente, beispielsweise Kugeln, die an einen der pole des Gegenstandes zur Anlage kommen, parallel zu den Walzenachsen entlang den Walzen vorwärts bewegt werden, wobei der Gegenstand durch Drehung um seine eigene Achse stabilisiert wird und während der Vorwärtsbewegung entlang der Walzen in dieser Lage bleibt.

2. Fördervorrichtung nach Anspruch 1,
dadurch **gekennzeichnet**,
daß die Walzen (10,12) mit einem Reibbelag versehen sind.

3. Fördervorrichtung nach Anspruch 1,
dadurch **gekennzeichnet**,
daß die Walzen (10,12) mit Borsten versehen sind.

4. Fördervorrichtung nach einem der vorstehenden Ansprüche,
dadurch **gekennzeichnet**,
daß die Drehelement, beispielsweise Kugeln (18), der Vortriebsvorrichtung (16) sich um ihre eigene Achse drehen.

5. Fördervorrichtung nach einem der vorstehenden Ansprüche,
dadurch **gekennzeichnet**,
daß die Vortriebsvorrichtung (16) eine Endloskette (20) aufweist, deren oberes Trum (24) zwischen den Walzen (10,12) und parallel zu diesen verläuft, wobei die Drehelemente, beispielsweise Kugeln (18) auf Trägern montiert sind, die an der Kette befestigt sind.

6. Fördervorrichtung nach Anspruch 5,
dadurch **gekennzeichnet**,
daß die Drehelemente, beispielsweise Kugeln (18), auf einer ihre Drehachse bildende Stange (34) montierbar sind, wobei jede Stange auf einem Träger (28), der mit einem Glied der Kette (20) verbunden ist, so montiert ist, daß sie sich frei drehen kann, und wobei Mittel zum Drehantrieb der Stange während der Kettenbewegung vorgesehen sind.

7. Fördervorrichtung nach Anspruch 6,
dadurch **gekennzeichnet**,
daß das Ende des Stange (34), auf der das Drehelement, beispielsweise die Kugel (18) befestigt ist, einen Ansatz (30) aufweist, der an ein festes Element (32) zur Anlage bringbar ist, so daß die Reibung zwischen dem festen Element und dem Ansatz der die Kugel tragenden Stange die Drehung der Kugel bewirkt.

8. Fördervorrichtung nach einem der vorstehenden Ansprüche zur Verwendung in einer Anlage zur Sortierung und/oder Kontrolle des Aussehens, der Maße und der Qualität von sich drehenden Gegenständen, insbesondere Früchten und Gemüsen,
dadurch **gekennzeichnet**,
daß Mittel zur Ermittlung der Aussenmaße und zur Ermittlung der Farbe und der Qualität der gesamten Oberfläche des Gegenstands mit Ausnahme der pole oberhalb der Fördervorrichtung angeordnet sind und zwar in dem Bereich, wo die Gegenstände aufgrund der Drehbewegung um ihre eigene Achse stabilisiert sind.

## Claims

1. Device for conveying articles, notably objects of revolution, and more especially fruits and vegetables, which is designed so as to align them and drive them in rotation about their own axis during their displacement in translation, said device being equipped with rotary transporting means receiving the objects to be conveyed, characterized in that said transporting means are constituted of:
- two longitudinal rollers (10, 12) having parallel axes, rotationally driven in the same sense about their respective longitudinal axis,
- an advancement system (16), disposed between the two rollers, which comprises a plurality of elements of revolution, such as notably balls (18), moving in a translatory motion between said rollers, the spacing between said elements of revolution such as balls being so determined that an aligned article can take up a position between two successive balls,
in such a way that the articles to be aligned are driven in rotation in the opposite sense to the rotation of the rollers and are pushed parallel to the axes of the rollers along these rollers, by said elements of revolution such as balls, which come into position on one of the poles of the article, this article then becoming stabilised in a rotary movement about its own axis while continuing to advance in this position along said rollers.

2. Conveying device according to Claim 1, characterized in that the rollers (10, 12) are provided with a friction facing.

3. Conveying device according to Claim 1, characterized in that the rollers (10, 12) are faced with bristles.

4. Conveying device according to any one of the preceding Claims, characterized in that the elements of revolution such as balls (18) of the advancement system (16) revolve about themselves.

5. Conveying device according to one of the preceding Claims, characterized in that the advancement means (16) comprise an endless chain (20), of which the upper side (24) displaces parallel to the rollers (10, 12) between them, the elements of revolution such as balls (18) being mounted on supports fixed to said chain.

6. Conveying device according to Claim 5, characterized in that said elements of revolution such as balls (18) can be mounted on a rod (34) which constitutes their axis of rotation, each rod being mounted on a support (28) fixed to a link of the chain (20) in such a way as to be free to rotate, means being provided for driving said rod in rotation during the displacement of the chain.

7. Conveying device according to Claim 6, characterized in that the end of the rod (34) on which the element of revolution such as a ball (18) is mounted comprises a ferrule (30) which comes into bearing against a fixed element (32) so that the friction between this fixed element and the ferrule of the rod carrying the ball causes the ball to rotate.

8. Device according to any one of the preceding Claims, applied to an installation for optical, dimensional sorting and/or inspection and quality control of objects of revolution such as, especially, fruits and vegetables, characterized in that means for dimensional analysis and colorimetric and qualitative analysis of the whole surface of the object with the exception of its poles are disposed above the conveying device in the downstream part where the objects are stabilized in their rotational movement about their own axis.
